# EUROPEAN PATENT APPLICATION

(11) **EP 3 181 206 A1**
(43) Date of publication of application: **21.06.2017**
(21) Application number: 15832044.0
(22) Date of filing: 05.08.2015
(51) Int. Cl.: A63C 17/01, A63C 17/00

(54) **SPRING-FORM FLEXIBLE SKATEBOARD**

(30) Priority: 14.08.2014 KR 20140105789
(71) Applicant: Han, Shin-kyu, Seoul 05096 (KR)
(72) Inventor: KIM, Jun-hong, Cheongju-si Chungcheongbuk-do 28124 (KR)
(74) Representative: Arth, Hans-Lothar
(86) International application number: PCT/KR2015/008186
(87) International publication number: WO 2016/024751

(57) **Abstract**

The present invention relates to a spring-form flexible skateboard. The skateboard comprises: front and rear plates (3, 5) disposed separated from each other by a predetermined distance: a flexible torsion part (7) which is integrally disposed between the front and rear plates (3, 5), and has a spring structure of a wrinkled shape, wheels (9) which are rotatably mounted on brackets (13) rotatably mounted on the front and rear plates (3, 5); and a support (31) which is disposed between the front and rear plates (32, 34) so as to support the torsion part (7), and of which one end is connected to the front plate (32) and the other end is connected to the rear plate (34) while the milled section supports the torsion part (36), thereby making it possible to prevent sagging towards the rear.

## Description

### [Technical Field]

The present invention relates to a skateboard, and relates to a skateboard that freely changes the direction due to twisting and restoring in all directions such as twisting in a circumferential direction and twisting in a left and right direction by integrally forming a torsion part having a wrinkled spring shape between front and rear plates.

### [Background Art]

In recent years, leisure activities are increased due to the five-day workweek, and there are leisure activities. For example, various leisure activities using sports equipment such as water sports, roller blades, roller skates, and skateboards are enjoyed.

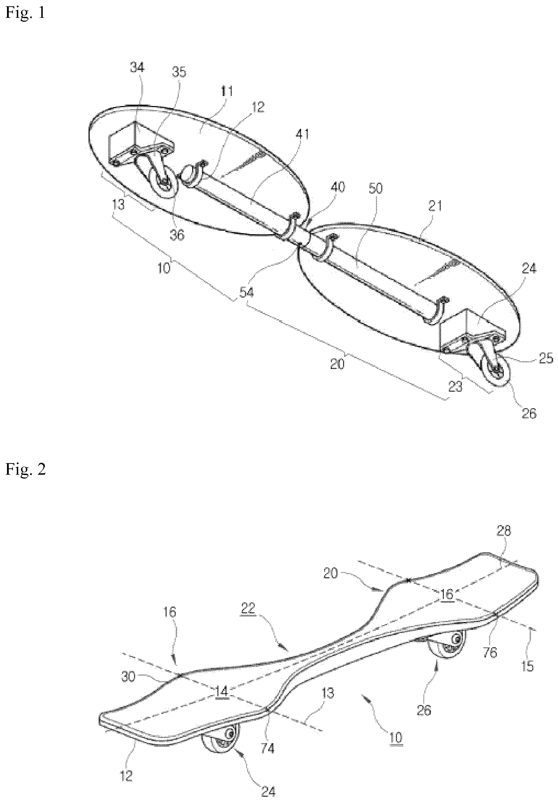

Particularly, a variety of types of skateboards have been proposed, and Patent Registration No. 10-0394848 (Title: skateboard with direction-caster) is illustrated as on example thereof in FIG. 1.

This related art relates to the skateboard including a coupling element that fixes a front board 10 to a rear board 20 so as to be distant from each other. In this skateboard, at least one of the two boards 10 and 20 includes one or more direction-casters 13 and 23 attached to bottom surfaces of plates 11 and 21, and the coupling element includes an elastic body so as to be elastically restored at the time of twisting or bending.

However, since the coupling member that couples the front and rear plates is a single elastic body having a cylindrical shape, there are limitations of twisting and restoring force, and thus, such a skateboard has a problem that the direction change is lemitted.

As another related art, U.S. Patent Registration No. 20140070509 (Title: One piece flexible skateboard) has been proposed in FIG. 2, and a front board 18 and a rear board 20 are integrally connected by a connection portion 22.

However, in this related art, the connection portion 22 has elastic force but has a one-directional straight line structure. Thus, cracks may be caused by cumulative fatigue when the connection portion is repeatedly twisted, and durability may be deteriorated due to structural deformation.

### [Disclosure]

### [Technical Problem]

Accordingly, the present invention has been made in order to solve the problems, and an object of the present invention is to provide a skateboard which is capable of easily changing the direction in all directions such as twisting in a front and rear direction and in a left and right direction by integrally forming front and rear plates by a torsion bar having a wrinkled spring structure and is capable of being easily manufactured by a single moulding process by integrally forming the front and rear plates as a whole.

### [Technical Solution]

In order to achieve the above object, an embodiment of the present invention provides a skateboard (1) that is propelled forwards, including: front and rear plates (3, 5) that are disposed so as to be separated from each other with a predetermined distance; a flexible torsion part (7) that is integrally formed between the front and rear plates (3, 5) and which is a wrinkled spring; and wheels (9) that are rotatably attached to brackets (13) which are rotatably attached to the front and rear plates (3, 5).

Another embodiment of the present invention provides a skateboard (1) including: front and rear plates (3, 5) that are disposed so as to be separated from each other with a predetermined distance; a flexible torsion part (7) that is integrally formed between the front and rear plates (3, 5) and which has a wrinkled spring structure; wheels (9) that are rotatably attached to brackets (13) which are rotatably attached to the front and rear plates (3, 5); and a support (31) that is disposed between the front an drear plates (32, 34) to support the torsion part (7), includes one end connected to the front plate (32), the other end connected to the rear plate (34), and an intermediate portion supporting a torsion part (36), and prevents the torsion part from being deflected vertically.

### [Effect of the Invention]

As described above, the skateboard according to the embodiment of the present invention have the following effects.

Firstly, the skateboard includes the front plate, the rear plate, and the wrinkled torsion part that is integrally disposed between these plates. Since these components are integrally formed, all these members can be manufactured by a single injection-moulding. Thus, manufacturing cost can be reduced, and a manufacturing process is simple. Further, since a weight of the skateboard manufactured in this manner is reduced, the skateboard is easy to carry.

Secondly, the torsion part is configured such that two springs are disposed in parallel with each other, and the springs respectively have wrinkled structures in which a plurality of unit springs is continuously disposed. Thus, the torsion part can be easily twisted in all directions such as the left and right direction or the circumferential direction and can be restored to its original position, and thus, the direction of the skateboard can be changed in a narrow space due to flexibility. Further, the skateboard has excellent durability.

Thirdly, since two springs constituting the torsion part are connected by the fixation bar, the springs are integrally moved by being prevented from being independently twisted, and thus, it is possible to prevent the skateboard from being deformed.

Fourthly, since the support is attached to the lower side of the torsion part, it is possible to prevent the wrinkled spring from being deflected vertically, and thus, the user can stably ride the skateboard.

### [Description of Drawings]

FIG. 1 is a diagram showing an example of a skateboard according to the related art.
FIG. 2 is a diagram showing another example of the skateboard according to the related art.
FIG. 3 is a perspective view showing a structure of a spring-form flexible skateboard according to an embodiment of the present invention.
FIG. 4 is a side view of FIG. 3.
FIG. 5 is a plan view of FIG. 3
FIG. 6 is a plan view showing an operation state of the skateboard shown in FIG. 3
FIG. 7 is a plan view of another embodiment of the skateboard shown in FIG. 3 and shows that a support for preventing drop-down is provided on a lower side of a torsion bar.
FIG. 8 is a side view of FIG. 7 and is a diagram showing a section shape of the support.

### [Best Mode]

Hereinafter, a spring-form flexible skateboard according to an embodiment of the present invention will be described in detail with reference to the accompanying drawings.

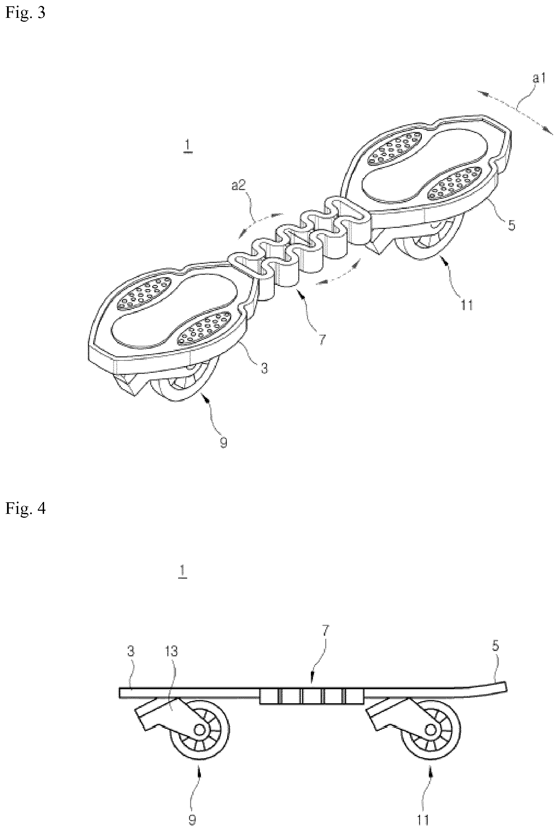

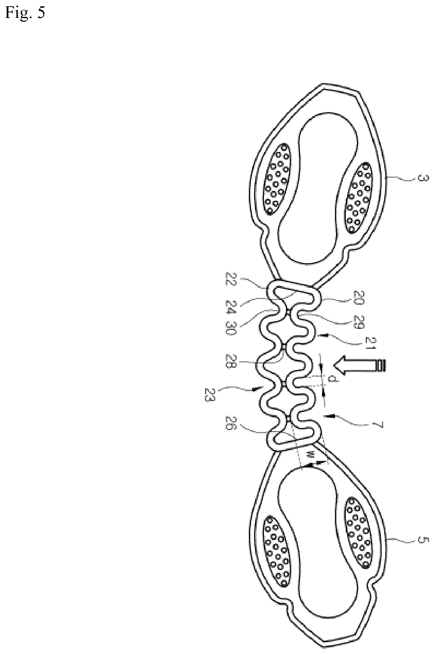

As shown in FIGS. 3 to 6, a skateboard 1 proposed by the present invention includes front and rear plates 3 and 5 that are disposed so as to be separated from each other with a predetermined distance; a flexible torsion part 7 that is integrally formed between the front and rear plates 3 and 5 and has a wrinkled spring structure; deformation prevention portions 28 that are disposed at the torsion part 7 and prevent deformation of the torsion part 7; and wheels 9 that are respectively disposed at the front and rear plates 3 and 5.

In the skateboard 1 having such a structure, the front plate 3 refers to a board 1 having a typical structure. That is, a user can ride the skateboard, protrusions or patterns may be formed in order to improve frictional force the skateboard, and the skateboard has strength enough to endure a weight of the user.

The rear plate 5 may have the same or similar shape as or to that of the front plate 3, or may have a shape different from that of the front plate. Thus, the user appropriately opens their both feet, and puts their feet up on the front and rear plates 3 and 5. Accordingly, the user can ride the skateboard.

The front and rear plates 3 and 5 are elastically connected by the torsion part 7, and the torsion part 7 has a wrinkled spring structure.

The front and rear plates 3 and 5 and the torsion part 7 are connected to each other, and are integrally formed as a whole. These members constitute the skateboard. The skateboard may be integrally manufactured by a manufacturing process such as injection moulding.

Such a skateboard may be manufactured by various processes. For example, the skateboard may be manufactured by disposing a mould plate having the same shape as that of the skateboard, that is, a shape corresponding to the front and rear plates 3 and 5 and the torsion part 7 within a mould, injecting synthetic resin into the mould, and cooling the synthetic resin.

In this case, the front and rear plates 3 and 5 and the torsion part 7 are integrally formed at a time by using a single mould plate, and are manufactured as a one structure as a whole.

The wheels 9 are respectively attached to lower sides of the front and rear plates 3 and 5 so as to be rotated. The wheels 9 may be rotated by being connected to brackets 13 provided on bottom surfaces of the front and rear plates 3 and 5 by using bearings.

In this case, the brackets 13 may be attached to the bottom surface of the front and rear surfaces 3 and 5 by using the bearings so as to be rotated. Thus, the wheels can be rotated in a 360-degree range.

Accordingly, when the user propels while twisting the front and rear plates 3 and 5 from side to side a along a first arrow direction a1, the wheels 9 can roll in all directions without limitation of the direction.

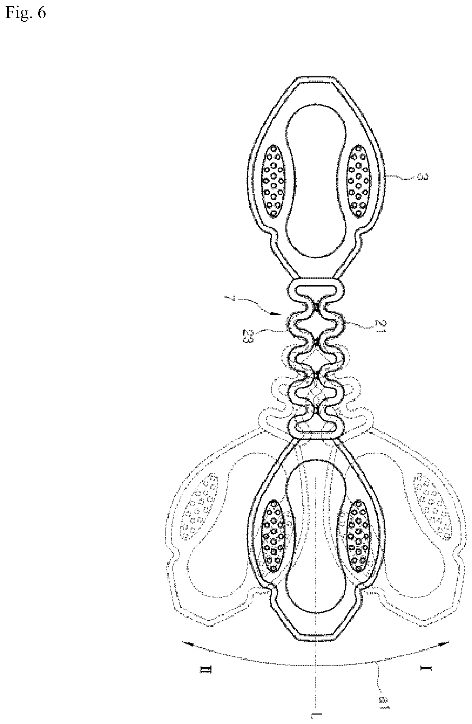

Meanwhile, the torsion part 7 is integrally disposed between the front and rear plates 3 and 5 to provide elastic force. Thus, it is possible to acquire acceleration force by alternately pumping the front and rear plates 3 in a left and right direction which is the first arrow direction a1 (FIG. 6) or in a circumferential direction of an axis which is a second arrow direction a2 (FIG. 3) with an axial line L as its center.

The torsion part 7 includes a first connecting bar 24 that is integrally connected to the front plate 3; a second connecting bar 26 that is integrally connected to the rear plate 5; a first spring 21 that has one side connected to one end of the first connecting bar 24 and the other side connected to the other end of the second connecting bar 26, has a wrinkled shape, and generates elastic force; and a second spring 23 that has one side connected to the other end of the fist connecting bar 24 and the other side connected to the other end of the second connecting bar 26, is disposed in parallel with the first spring 21, has a wrinkled shape, and generates elastic force.

The first spring 21 is configured such that a plurality of "U"-shaped unit springs 29 and a plurality of reversed "U"-shaped unit springs 20 are alternately and continuously disposed. The first spring has a wrinkled structure by being bent in the left and right direction a1 with the axial line as its reference.

That is, the reversed "U"-shaped unit springs 20 are disposed in a portion in which the first spring and the first connecting bar 24 are connected, and the "U"-shaped unit springs 29 are continuously connected to the reversed "U"-shaped unit springs 20. In such a manner, the reversed "U"-shaped unit springs 20 and the "U"-shaped unit springs 29 are alternately connected.

In this manner, the plurality of "U"-shaped and reversed "U"-shaped unit springs 20 and 29 are continuously disposed. When these springs are alternately twisted from side to side with the axial line (L) as its center, intervals d between the unit springs 20 and 29 are narrowed, and thus, the springs can be easily twisted in the left and right direction. Since the elastic force is reversely applied to the springs, the springs can be easily returned to its original position.

When external force is applied along the circumferential direction of the axial, the intervals between the unit springs 20 and 29 contract and expand, and thus, it is possible to generate the elastic force.

In this case, it is preferable that a ratio of the interval d between the "U"-shaped unit spring 20 and the reversed "U"-shaped unit spring 29 to a width W of the spring 21 is 1:1 to 1:2.

That is, when the ratio of the interval d to the width W is equal to or less than 1: 1, since it is difficult to twist the spring in the left and right direction, exertion is greatly required in propelling the skateboard.

When the ratio of the interval d to the width W is equal to or greater than 1:2, it is easy to twist the spring in the left and right direction, but the elastic force to return to its original force is insufficient.

Accordingly, it is preferable that the interval d and the width W between the first and second springs 21 and 23 are maintained in a range of 1:1 to 1:2.

The second spring 23 has the same structure as that of the first spring 21, and is disposed symmetrically with the first spring 21 with the axial line L as its center.

That is, the end of the second spring 23 is connected to the first connecting bar 24, and the other end thereof is connected to the second connecting bar 26. A plurality of "U"-shaped and reversed "U"-shaped unit springs 22 and 30 are alternately and integrally disposed.

Here, the unit springs of the second spring are disposed symmetrically with those of the first spring 21 with the axial line L as its center.

That is, the "U"-shaped unit springs 22 of the second spring 23 are disposed in positions corresponding to positions of the reversed "U"-shaped unit spring 20 of the first spring 21, and the reversed "U"-shaped unit springs 30 are disposed in positions corresponding to positions of the "U"-shaped unit springs 29 of the first spring 21.

As described above, the first spring 21 and the second spring 23 are disposed symmetrically with each other with the axial line L as its center, and thus, the front and rear plates 3 and 5 can be connected so as to be elastically twisted by the elastic force.

When the front and rear plates 3 and 5 are repeatedly twisted from side to side with the axial line L as its center, operations of the first and second springs 21 and 23 will be described as follows.

That is, when the rear plate 5 is moved to a first position I as shown in FIG. 6, the first and second springs 21 and 23 are bent in one side along the first arrow a1 with the axial line L as its center. Here, the intervals d between the plurality of unit springs 20 and 29 constituting the first spring 21 are narrowed, whereas the intervals d between the plurality of unit springs 22 and 30 constituting the second spring 23 are widened.

Here, since the intervals d between the unit springs 20, 22, 29 and 30 are narrowed or widened in a fine unit, the first and second springs 21 and 23 can be freely bent, and thus, the propelling direction of the skateboard can be freely changed.

When the first and second springs 21 and 23 are bent, since repelling power is applied in an opposite direction, the intervals d between the unit springs 20 and 29 are reversely moved, and the intervals d between the unit springs of the first spring 21 are widened, whereas the intervals d between the unit springs of the second spring 23 are narrowed.

Accordingly, the first and second springs 21 and 23 bent in the one direction with the axial line L as its center are bent in the other direction of the axial line L, that is, a second position II by the elastic force. In this case, the user pushes the rear plate 5 toward the other direction of the axial line L with slight force, and thus, the rear plate 5 can be easily moved to the second position.

Ultimately, the user can easily and variously change the direction of the front and rear plates from the first position to the second position or from the second position to the first position by the elastic force of the torsion part 7 with slight force.

Since the front and rear plates 3 and 5, the first spring 21, and the second spring 23 are integrally formed using the elastic synthetic resin, when the user steps on any one edge of both edges of the front and rear plates 3 and 5 or takes their foot off the edge, that is, when the skateboard is twisted to the second arrow direction a2 and the edge is vertically moved up and down in a reciprocating motion, the first spring 21 and the second spring 23 are alternately twisted in the circumferential direction of the axis which is the second arrow direction a2 while being twisted by their own elasticity.

Meanwhile, the deformation prevention portion 28 is provided between the first and second springs 21 and 23 of the torsion part 7. The deformation prevention portion 28 connects integrally the unit springs 20 and 29 constituting the first and second springs 21 and 23, and thus, the deformation prevention portion can be bent simultaneously when the first and second springs 21 and 23 are bent.

More specifically, the deformation prevention portion 28 includes a fixation bar, and the fixation bar connects the "U"-shaped unit springs 29 of the first spring 21 and the reversed "U"-shaped unit springs 30 of the first spring 21.

Accordingly, since the unit springs of the first spring 21 and the second spring 23 are integrally connected by the deformation prevention portion 28, the interval therebetween is prevented from being widened, and the springs are simultaneously bent when these springs are bent.

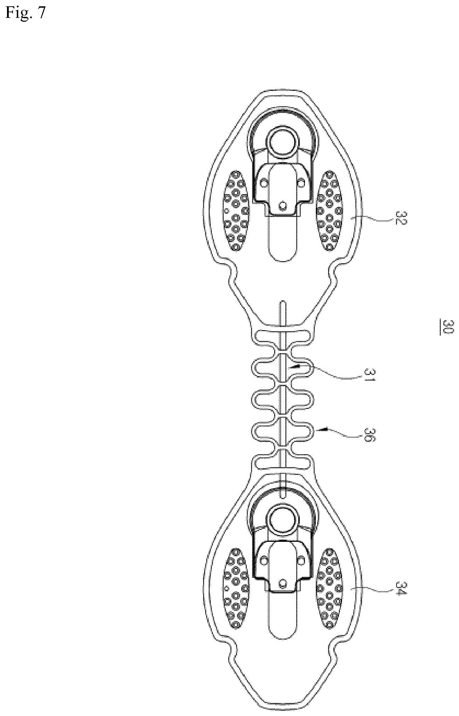

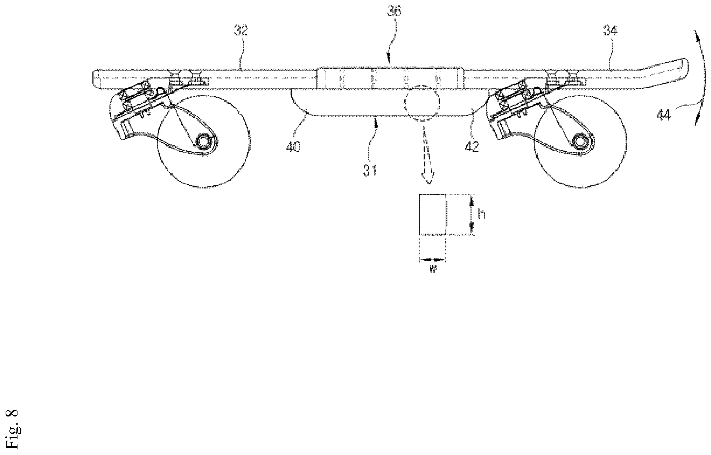

Meanwhile, another embodiment of the present invention is illustrated in FIGS. 7 and 8. When the torsion bar is made of an elastic material like a spring, the torsion bar may be deflected. Accordingly, the present embodiment is different from the above-described embodiment in that a support is disposed in order to prevent the torsion bar from being deflected.

That is, a support 31 made of a flexible material is disposed under a torsion part 36. One end 40 is connected to a front plate 32, the other end 42 is connected to a rear plate 34, and an intermediate portion supports a lower side of the torsion part 36. Thus, it is possible to prevent the torsion part from being deflected vertically.

In this case, it is preferable that the support 31 is a flexible material so as to be twisted from side to side and so as not to be deflected in a vertical direction 44.

For example, a section of the support 31 may have a rectangular shape, and may be formed such that a height h is greater than a width W in the left and right direction.

The support 31 is manufactured by the same mould used when the front and rear plates 32 and 34 are formed, and thus, the front and rear plates 32 and 34 are integrally formed.

As stated above, the support 31 supports the lower side of the torsion bar 36 which is the wrinkled spring while the support is disposed between the front and rear plates 32 and 34, and thus, it is possible to prevent the torsion bar 36 from being deflected vertically during the riding.

Of course, the support 31 can be freely twisted in the left and right direction, and thus, can be prevented from being vertically deflected by appropriate elastic force.

### [Industrial Applicability]

The present invention relates to a skateboard, and is applicable to the industry fields of leisure and sports since the skateboard can freely change the direction due to twisting and restoring in all directions such as twisting in the circumferential direction of the axis and the twisting in the left and right direction by integrally forming the torsion part having the wrinkled spring structure between the front and rear plates.

## Claims

1. A skateboard (1) that is propelled forwards, comprising:
front and rear plates (3, 5) that are disposed so as to be separated from each other with a predetermined distance;
a flexible torsion part (7) that is integrally formed between the front and rear plates (3, 5) and which is a wrinkled spring; and
wheels (9) that are rotatable attached to brackets (13) which are rotatable attached to the front and rear plates (3, 5).

2. A skateboard (1) comprising:
front and rear plates (3, 5) that are disposed so as to be separated from each other with a predetermined distance;
a flexible torsion part (7) that is integrally formed between the front and rear plates (3, 5) and which has a wrinkled spring structure;
wheels (9) that are rotatable attached to brackets (13) which are rotatable attached to the front and rear plates (3, 5); and
a support (31) that is disposed between the front an drear plates (32, 34) to support the torsion part (7), includes one end connected to the front plate (32), the other end connected to the rear plate (34), and an intermediate portion supporting a torsion part (36), and prevents the torsion part from being vertically deflected.

3. The skateboard (1) according to claim 1 or 2,
wherein the torsion part (7) includes:
a first connecting bar (24) that is integrally connected to the front plate (3);
a second connecting bar (26) that is integrally connected to the rear plate (5);
a first spring (21) that includes one side connected to one end of the first connecting bar (24) and the other side connected to one end of the second connecting bar (26), has a wrinkled shape, and generates elastic force; and
a second spring (23) that includes one side connected to the other end of the first connecting bar (24) and the other side connected to the other end of the second connecting bar (26), is disposed in parallel with the first spring (21), has a wrinkled shape, and generates elastic force.

4. The skateboard (1) according to claim 3,
wherein the first and second springs (21, 23) have wrinkled structures in which a plurality of unit springs having a "U" shape and a reversed "U" shape is repeatedly disposed, are made of synthetic resin which generates elastic force, and are symmetric with each other with an axial line (L) as a center.

5. The skateboard (1) according to claim 3,
wherein the first and second springs (21, 23) are alternately twisted in a circumferential direction of an axis with an axial line (L) as a center.

6. The skateboard (1) according to claim 4,
wherein a deformation prevention portion (28) is further disposed at the torsion part (7) to prevent the torsion part (7) from being deformed,
the deformation prevention portion (28) includes a fixation bar, and
the fixation bar connects the "U"-shaped unit springs (29) of the first spring (21) and the reversed "U"-shaped unit springs (30) of the second spring (23).

7. The skateboard (1) according to claim 1 or 2,
wherein the front and rear plates (3, 5) and the torsion part (7) are integrally formed at a time by a single mould plate and have a single structure as a whole by disposing a mould plate having a shape corresponding to the front and rear plates (3, 5) and the torsion part (7) within a mould, injecting synthetic resin into the mould, and cooling the synthetic resin.

8. The skateboard (1) according to claim 2,
wherein the support (31) is made of a flexible material having a section shape such that a height (h) is greater than a width (W) in a lateral direction a height in order to twist from side to side, and to prevent the vertical deflection.
